# EUROPEAN PATENT SPECIFICATION

(11) **EP 2 719 275 B1**
(45) Date of publication and mention of the grant of the patent: **17.04.2019**
(21) Application number: 13187127.9
(22) Date of filing: 02.10.2013
(51) Int. Cl.: A01G 23/08, F16P 3/12

(54) **Method and apparatus for controlling a timber-working device**
Verfahren und Vorrichtung zur Steuerung einer Holzbearbeitungsvorrichtung
Procédé et appareil pour commander un dispositif de travail du bois

(30) Priority: 10.10.2012 NZ 60293012
(43) Date of publication of application: 16.04.2014
(73) Proprietor: Waratah NZ Limited, 3444 Tokoroa (NZ)
(72) Inventor: Kaye, Brett James, 3140 Tauranga (NZ)
(74) Representative: John Deere GmbH & Co. KG

(56) References cited:
- WO-A1-02/13597
- GB-A- 2 462 590
- US-A- 5 746 261
- US-A1- 2011 148 581
- US-A1- 2012 188 089
- US-B2- 8 115 650

## Description

The present invention relates to a method, and apparatus, for controlling a timber-working device.

It is well-known to mount timber-working devices to a carrier vehicle in order to perform a number of operations in connection with timber processing. These operations may include one, or a combination of, grappling and felling a standing tree, delimbing a felled stem, debarking the stem, and cutting the stem into logs - commonly using at least one chainsaw. A significant hazard associated with timber-working devices including a chainsaw is a phenomenon known as "chain shot". Chain shot results from the saw chain breaking, following which parts from the chain or other portions of the saw assembly are propelled at high velocity from the harvester into the surrounding environment. Other types of saw, such as disc saws, may experience a similar phenomenon whereby the teeth of the saw are propelled from the saw.

Further, many timber-working devices include a drive or feed mechanism in the form of at least one driven roller - for example rollers mounted on grapple arms which grip the stem and control position of the stem relative to the device. The drive mechanism allows the stem to be moved relative to the timber-working device for debarking, delimbing, and cutting.

In the course of doing so, the stem may be fed either forward or reverse through the device at upwards of 5 m/s. A significant amount of damage may be caused to personnel or machinery being struck by a stem travelling at such speeds.

Another hazard occurring during operation of the timber-working device is the risk of crushing by a felled tree - particularly by larger trees over which an operator may have a lower degree of control.

The operator of the carrier vehicle is at particular risk to such hazards, generally being the closest person to the timber-working device.

One method of improving operator safety is to improve the impact resistance of the operator cab windshield. This may be achieved, for example, through the use of polycarbonate glazing.

However, there are a number of issues with impact resistant polycarbonate glazing, including:
- Difficulty in maintaining cleanliness of such materials in the harsh operating environment in which timber processing is carried out;
- Poor durability of the material due to softness means that the windshield is susceptible to scratching and thus reduced visibility;
- Required thickness of the material causing optical distortion and eye strain in operators;
- Modifications to cabin structure to fit polycarbonate glazed windshields impacting the ability of the operator cabin to meet safety certification standards;
- Increased costs - having an associated risk of machine owners not replacing damaged windshields in a timely fashion due to the expense of doing so.

Additionally, while the operator is continually in the vicinity of the harvester head and thus exposure to these hazards, other personnel and equipment in the area may also be vulnerable to being struck and damaged.

It is known to use radio frequency identification (RFID) systems to identify the presence and location of personnel and equipment within a work environment, and controlling access to an area, or operation of equipment, based on the danger associated with the presence of personnel in the vicinity.

For example, United States Patent No. 8,115,650 discloses a system by which the movement of a vehicle is controlled in response to the presence of workmen in proximity to the vehicle. This patent discloses that directional antennas may be used to spatially limit a danger zone in order to minimise the number of alarms being triggered because of workmen in proximity to a machine but who are not within the danger zone (within which the likelihood of physical collision is greatly increased).

However, the prior art does not account for hazard zones associated with operations performed by the vehicle or apparatus itself - particularly those in the working conditions of a harvester head, specifically chain shot and/or feed through of a stem.

Timber-working devices often operate under the canopy of a forest, with various objects (including standing trees and other machinery) interposed between the device and personnel interfering with some object locating technologies.

It is an object of the present invention to address the foregoing problems or at least to provide the public with a useful choice.

Further aspects and advantages of the present invention will become apparent from the ensuing description which is given by way of example only.

According to one aspect of the present invention there is provided a method for operation of a timber-working device, according to claim 1.

According to another aspect of the present invention there is provided an apparatus for use with a timber-working device, according to claim 15.

Reference to a hazard zone should be understood to mean a predetermined space within which a person or object is at risk of being injured or damaged by a particular operation of the timber-working device - whether due to regular operation of the timber-working device or malfunction of same.

In particular, the operation is envisaged as being one which extends beyond the physical dimensions of the timber-working device itself - as will be evident from the examples discussed further below.

The hazard zone is determined based on the likely path of an object being propelled from the timber-working device due to at least one feature or operation of the device. For example, the object may be a tooth of a disk saw, or link of a chainsaw (as will be discussed further below).

In another embodiment, the hazard zone may be determined based on the likely path of an object extending from the timber-working device due to at least one feature or operation of the device. For example, the timber-working device may be the grapple of a skidder used to drag cut stems - where the hazard zone is the length of the stem extending from the grapple. The length of the stem used to determine the hazard zone may, for example, be the greatest length of stem cut by other timber-working devices in the area.

In another example, the timber-working device may be a swing yarder (also known as a grapple yarder). Swing yarder operation involves running a grapple along a cable strung between two points, and lowering the grapple to grasp felled stems. Lowering of the grapple, and subsequent movement of the grapple carrying the stems, presents a hazard to personnel on the ground. The hazard zone may be associated with such a system may be the space directly below the grapple, and/or the length of the stem extending from the grapple once engaged.

Preferably the timber-working device is a harvester head, and may be referred to as such throughout the specification. Harvester heads typically have the capacity to grapple and fell a standing tree, delimb and/or debark a felled stem, and cut the stem into logs. For ease of understanding, reference will herein be made to the timber-working device being a harvester head. However, a person skilled in the art should appreciate that the present invention may be used with other timber-working devices, for example a feller buncher, debarking and/or delimbing head, disc saw head, saw grapple, swing yarder, and so on.

In a preferred embodiment the harvester head includes a cutting means configured to cut through the stem.

Preferably the cutting means includes at least one saw. In particular it is envisaged that the present invention may have particular application to timber-working devices including at least one chainsaw. However, this is not intended to be limiting as the saw may take other forms - for example a disc saw.

Harvester heads may include a main saw which is primarily used for the felling and cross cutting of stems. Further, some timber working heads may include a secondary or topping saw. The topping saw is typically of a lower specification than the main saw, and used primarily during processing once a tree is felled.

Each chainsaw may include a saw chain, a saw bar around which the saw chain moves, and a saw drive gear for driving the saw chain around the saw bar.

In a preferred embodiment at least one hazard zone projects from the cutting means.

It is envisaged that the hazard zone may centre about the saw drive gear, although it should be appreciated that this is not intended to be limiting. In an exemplary embodiment wherein the cutting means is a chainsaw, the hazard zone extends through the angle of rotation of the chainsaw about its pivot point in the plane aligning with the cutting plane of the cutting means - i.e. the saw bar.

It should be appreciated that the hazard zone may take the structure of the timber-working device into account. For example, it is envisaged that the chainsaw of an exemplary harvester head may rotate through a 93° angle, with the initial 5-7° contained within the harvester body. As such, the hazard zone may extend through the substantially 90° angle outside the body.

Further, the hazard zone may extend through substantially 30° in the plane substantially lateral to the cutting plane. This angle is an industry standard with regard to chainsaws.

It should be appreciated that these angles are described by way of example only, and the hazard zone or zones implemented with the present invention may vary in light of various factors such as operating conditions, device configuration - for example saw speed, safety standards, organisational requirements and so on.

Preferably a hazard zone projects from either side of the cutting means.

This configuration may be particularly useful for defining the space within which chain shot may occur. In particular, such a hazard zone may define the area in which the greatest risk due to chain shot is present, while delimiting the space sufficiently to permit safe operation through as great a range of orientations as possible.

It should be appreciated that this definition of the hazard zone is not intended to be limiting, and that other configurations of the hazard zone or zones associated with the cutting means may be used with the present invention.

In a preferred embodiment recommended operation of the harvester head includes disabling operation of the cutting means when the location of the object tracking device is within the at least one hazard zone associated with the cutting means.

Preferably the harvester head includes a drive mechanism including at least one driven roller configured to control the position of a stem held by the harvester head relative to the harvester head.

In a preferred embodiment at least one hazard zone projects in at least one direction in which a stem is configured to be driven by the drive mechanism.

In a preferred embodiment recommended operation of the harvester head includes controlling the drive mechanism when the location of the object tracking device is within the at least one hazard zone associated with the drive mechanism.

Control of the drive mechanism may include adjusting the speed of the drive mechanism. Further, control of the drive mechanism may include disabling operation of the drive mechanism. Disabling operation of the drive mechanism may include limiting operation to be in one direction, for example away from the operator's cabin.

In one embodiment the hazard zone may be adjusted depending on the current configuration or operation of the harvester head.

For example, where the speed of the drive mechanism is variable the hazard zone associated with the feed operation may vary in accordance with the current feed through speed.

In another embodiment, the harvester head may be configured to determine the diameter of the stem being processed, and the hazard zone may be adjusted depending on the measured diameter.

It is envisaged that this adjustment of the hazard zone may be based on the physical dimensions of the stem such as width, or properties of the stem inferred from diameter such as mass.

For example, stems with a greater mass may have a greater hazard area due to the greater momentum when feeding the stem using the drive mechanism.

Further, the length of the stem may be projected from the measured diameter by comparing previous stem data for similar diameter trees (whether in a specific stand of trees, or forest in general).

In one embodiment the hazard zone may be adjusted depending on the length of the stem being processed by the harvester, whether measured or predicted. For example, with regard to the hazard zone or zones associated with the drive mechanism, the hazard zone may extend to at least the greatest length of the stem being processed.

In another example, a standing tree may have a hazard zone associated with felling - an area surrounding a tree to be felled. The recommended operation of the harvester may include disabling operation of the cutting means when the location of the object tracking device is within the hazard zone surrounding the tree. The size of the hazard zone is determined, at least in part, on a measured diameter of the tree when the harvester is mounted to it.

The hazard zone may include a buffer zone extending beyond the length of the stem - whether a set distance or proportional to the length of the stem.

Reference to an object tracking device should be understood to mean any means by which a location relative to a base position may be determined. It should be appreciated that reference to location may mean proximity, direction, or a combination thereof. It should be appreciated that a number of technologies for achieving this are known. For example, the object tracking device may be a Radio Frequency Identification (RFID) tag, a Global Positioning System (GPS) locator, or Real-time Locating System (RTLS) tag. It should be appreciated that this is not intended to be limiting, and that other forms of object tracking device may be used with the present invention.

The system may include transmitters and receivers as known in the art in order to facilitate communication between the various components of the system.

The location of the object tracking device relative to the hazard zone may be determined by any means known in the art. For example, the harvester head may include an object tracking device of its own.

In a preferred embodiment, sensors may be used to determine movement of the head relative to its associated carrier vehicle, with the base position being a fixed position of the vehicle. For example, rotation sensors may be positioned on the rotator of the harvester head, as well at points of articulation or rotation on the carrier vehicle and vehicle arm. By combining the various sensor outputs, the current orientation of the harvester head and associated hazard areas relative to the base position and/or object tracking device may be determined.

In another embodiment, the head and/or carrier vehicle may include a compass to provide a frame of reference for orientation of the head and/or carrier vehicle.

It is envisaged that the object tracking device may be used to identify the nature of the object with which it is associated. For example, an object tracking device may identify whether the object is a person, or piece of equipment.

It should be appreciated that tracking devices may also be used to demarcate geographical features or infrastructure rather than objects as such - for example, cliffs, roads, or designated rest areas. Such areas may be "ring fenced" for protection - whether of the operator or people/equipment at those locations.

Control of the operation of the harvester head may be based at least on part on the type of object associated with the object tracking device. For example, if an object tracking device is identified as being associated with a container at a particular distance and within the hazard zone of a chainsaw, operation may be permitted to continue. In contrast, if the object was determined to be a person at the same distance, operation of the chainsaw may be stopped.

In a preferred embodiment, control of the operation of the harvester head may be based at least on part on the position of one object tracking device relative to another object tracking device. For example, if a person is determined to be within a hazard zone, but a protective object (such as a container) is determined to be between the person and the harvester head operation of the harvester head may not be interrupted.

In a preferred embodiment the location of the object tracking device may be used to determine proximity of the object tracking device to the harvester head.

In a preferred embodiment the processor is configured to determine the location of the object tracking device relative to at least one proximity zone surrounding the harvester head.

It is envisaged that a plurality of concentric proximity zones may be provided, each proximity zone having an associated hazard rating.

The hazard rating may be determined by a number of factors, for example the specifications of the harvester head and associated vehicle carrier, current operating characteristics of the harvester head, and/or safety requirements (whether based on local standards, or operator or site specific).

For example, with regard to chain shot the presence of personnel or equipment within a proximity zone closer to the harvester head may have a greater hazard rating than an outer proximity zone.

As a further example, a person may be designated as being at a greater risk of being damaged due to chain shot within a particular proximity zone than a piece of equipment.

In an exemplary embodiment the hazard rating of a proximity zone, and/or size of a proximity zone may be adjusted in response to inputs from the operator or timber working device itself.

For example, the operator may recognise that the next tree to be felled is greater in length or mass than others in the vicinity, and input an indicator of increased risk likelihood into the controller during the course of processing that tree. Alternatively, the diameter measurement on attaching the device to the tree may trigger determination of increased risk likelihood and result in automatic adjustment.

Similarly, the operator may recognise that the gradient of the area on which they are operating requires a greater proximity zone than at present, and increase the risk likelihood. Alternatively, a level sensor on the carrier may be used to automatically determine this.

It should be appreciated that the processor may directly or indirectly cause operation of the harvester head to be controlled in response to the determined recommended operation. For example, the processor may be one dedicated to performance of the present invention and configured to communicate the recommended operation to a control module configured to control operation of the harvester head. Alternatively, the processor may be that of an existing control system.

In a preferred embodiment the processor is configured to transmit notification of an object tracking device being within a hazard zone or proximity zone to an operator device.

The operator device may be, for example, a display, a siren, a strobe light, or any other sensory alarm.

It is envisaged that the notification may be transmitted to a display such as a touchscreen used by the operator to monitor and control operation of the harvester head, as the operator is likely to be observing such a display.

In one embodiment the notification may include the recommended operation of the harvester head. The system may be configured to allow an operator to authorise or override the recommended operation determined by the processor. For example, the operator may override the locking out of a chainsaw by performing a double selection of the saw activation button. Alternatively, the system may rely on the operator to manually perform the recommended operation.

The notification may include a visual representation of the location of the object tracking device relative to the harvester head.

Typically, the vision of the operator of a harvester head is restricted to a certain degree by the structure of the cab from which they operate, and the carrier vehicle itself. By providing the notification of the object tracking device being within a hazard zone or proximity zone, the operator of the harvester may take precautions or actions in order to maintain a safe working environment - whether before or after a high risk hazard condition has occurred. The various illustrative logical blocks, modules, circuits, and algorithm steps described in connection with the embodiments disclosed herein may be implemented as electronic hardware, computer software, or combinations of both. In particular, they may be implemented or performed with a general purpose processor such as a microprocessor, or any other suitable means known in the art designed to perform the functions described. The steps of a method or algorithm and functions described in connection with the embodiments disclosed herein may be embodied directly in hardware, in a software module executed by a processor, or in a combination of the two. If implemented in software, the functions may be stored as processor readable instructions or code on a tangible, non-transitory processor-readable medium - for example Random Access Memory (RAM), flash memory, Read Only Memory (ROM), hard disks, a removable disk such as a CD ROM, or any other suitable storage medium known to a person skilled in the art. A storage medium may be connected to the processor such that the processor can read information from, and write information to, the storage medium.

The various steps or acts in a method or process may be performed in the order shown, or may be performed in another order. Additionally, one or more process or method steps may be omitted or one or more process or method steps may be added to the methods and processes. An additional step, block, or action may be added in the beginning, end, or intervening existing elements of the methods and processes.

Further aspects of the present invention will become apparent from the following description which is given by way of example only and with reference to the accompanying drawings in which:
- FIG. 1A: is a side view of an exemplary timber-working system including, for example, a harvester head according to one aspect of the present invention;
- FIG. 1B: is a diagrammatic view of an exemplary control system for the timber-working system;
- FIG. 2A: is a side view of an exemplary timber-working system including, for example, a harvester head showing an exemplary hazard zone associated with the harvester head;
- FIG. 2B: is an elevated view of the timber-working system and associated hazard zones
- FIG. 3: is a flowchart illustrating an exemplary method for operating a harvester head according to one aspect of the present invention;
- FIG. 4: is an elevated view of an exemplary hazard zone associated with a harvester head for processing a tree stem according to another aspect of the present invention;
- FIG. 5: is an elevated view of another exemplary hazard zone associated with a harvester head for processing a tree stem according to another aspect of the present invention, and
- FIG. 6: is an elevated view of an exemplary embodiment of proximity zones associated with a harvester head for processing a tree stem according to another aspect of the present invention.

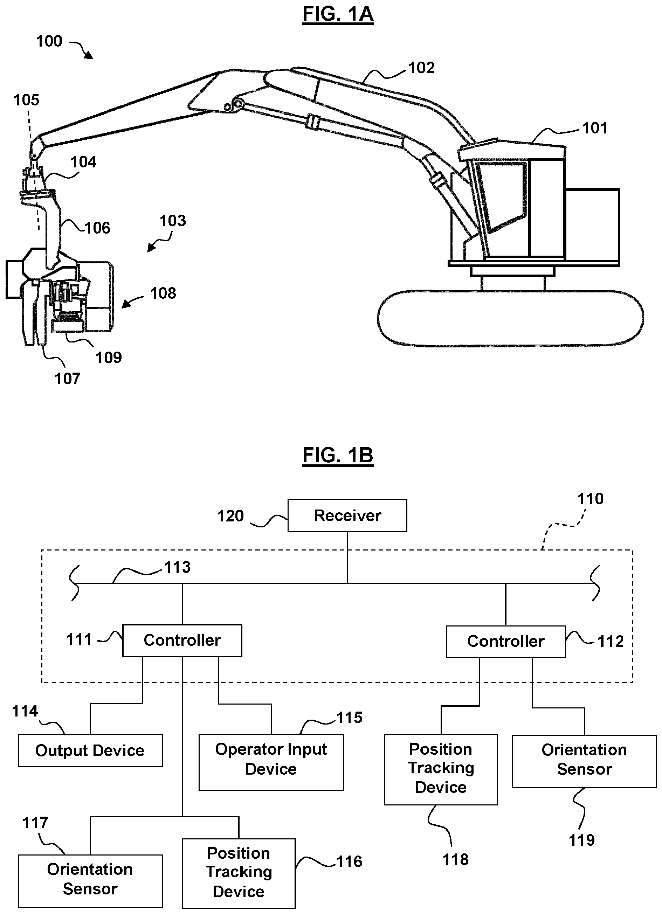

FIG. 1A illustrates a timber-working system including a carrier 100 for use in forest harvesting. The carrier 100 includes an operator cab 101 from which an operator (not shown) controls the carrier 100.

The carrier 100 further includes an articulated arm 102, to which a timber-working device in the form of a harvester head 103 is connected. Connection of the harvester head 103 to the arm 102 includes a rotator 104, configured to rotate the harvester head about the generally vertical axis of rotation marked by dashed line 105. A tilt bracket 106 further allows rotation of the harvester head 103 between a prone position (as illustrated) and a standing position. The harvester head 103 includes grapple or delimbing arms 107 configured to grasp the stem of a tree (not illustrated), at least one chainsaw at the end marked by arrow 108, and at least one feed roller 109 configured to control the position of the tree relative to the chainsaw 108.

Referring to FIG. 1B, the carrier 100 and harvester head 103 are controlled by an electronic control system 110. The control system 110 includes one or more electronic controllers, each controller including a processor and memory having stored therein instructions which, when executed by the processor, causes the processor to perform the various operations of the controller.

For example, the control system 110 includes a first controller 111 on board the carrier 100 and a second controller 112 on board the head 103. The controllers 111, 112 are connected to one another via a communications bus 113 (e.g., a CAN bus).

A human operator operates an operator input device 115 located at the operator's cab 101 of the carrier 100 to control the head 103. Details of operation are output to an output device 114 - for example a monitor. Certain automated functions may be controlled by first controller 111 and/or second controller 112.

A first position tracking device in the form of a first GPS transponder 116 is associated with the carrier 100 and electronically connected to first controller 111. The GPS transponder 116 has an associated unique identifier identifying the carrier 100. Further, the carrier 100 includes an orientation sensor, for example first compass 117, electronically connected to the first controller 111.

The head 103 also includes a position tracking device in the form of a second GPS transponder 118, electronically connected to second controller 112. The GPS transponder 118 has an associated unique identifier identifying the head 100 and hazard zones associated with operation of the head (as will be discussed further below).

Further, the head 103 includes an orientation sensor, for example second compass 119, electronically connected to the second controller 112. Alternatively, the orientation sensor could be a rotation sensor associated with rotator 104 - which together with the first compass 117 could be used to determine orientation of the head 103 relative to a cardinal direction.

The control system 110 is configured to receive signals from other GPS transponders in the vicinity via receiver 120, and process their positions relative to the carrier 100 and head 103 as discussed below.

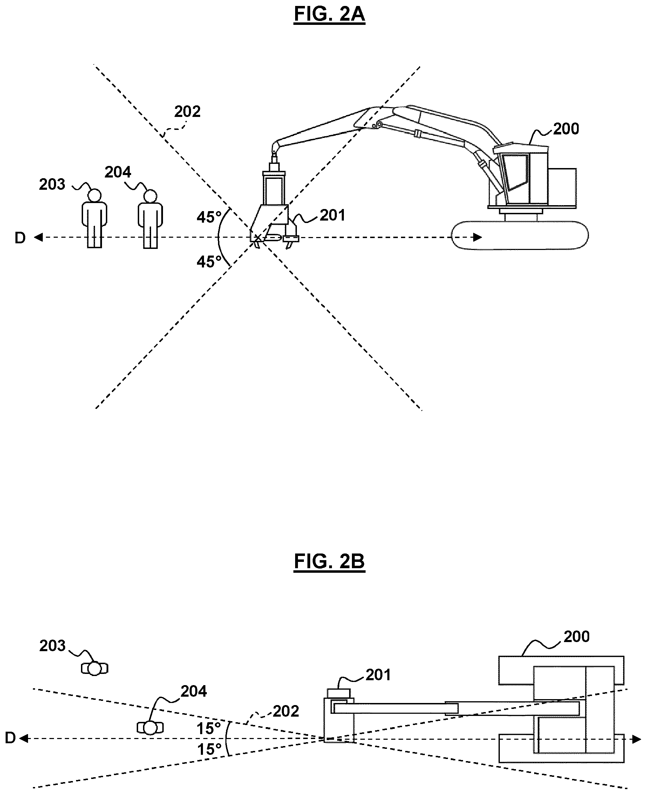

FIG. 2A and FIG. 2B illustrate a harvester carrier 200 for a harvester head 201, generally configured in the manner described with reference to FIG. 1A and FIG. 1B.

The harvester head 201 includes a chainsaw (not clearly illustrated) as known in the art. The harvester head 201 has a saw hazard zone indicated by dashed lines 202 centred about the saw drive gear.

As seen in FIG. 2A, the saw hazard zone 202 extends through substantially 90° in the plane aligning with the cutting plane of the saw bar. Referring to FIG. 2B, the saw hazard zone 202 may extend through substantially 30° in the plane substantially perpendicular to the cutting plane. It should be appreciated that the angles described herein are exemplary, and not intended to be limiting.

The distance D to which the saw hazard zone 202 extends may be determined by the operating speed of the chainsaw, and characteristics of the chain such as pitch or gauge. Two ground workers 203 and 204, each having a GPS transponder, are illustrated in FIG. 2A and FIG. 2B. In FIG. 2A, it may be seen that both workers are within the vertical element of the saw hazard zone 202, while in FIG. 2B only the second worker 204 is within the horizontal element of the saw hazard zone 202.

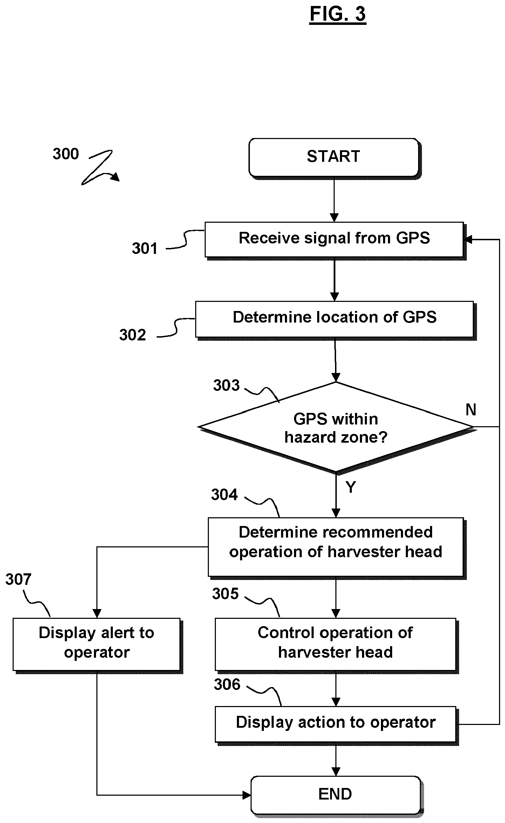

FIG. 3 illustrates a method 300 for operating a harvester head. The methods steps will be described with reference to FIG. 1B, FIG. 2A and FIG. 2B.

In step 301 the first controller 111 receives location signals from GPS transponders associated with workers 203 and 204 via receiver 120, and determines the nature of the object associated with the transponders.

In step 302 the first controller 111 receives signals from the first GPS transponder 116, first compass 117, second GPS transponder 118, second compass 119 or rotation sensor associated with rotator 104.

At step 303 the first controller 111 determines whether the workers 203 and 204 are within the saw hazard zone 202 associated with operation of the chainsaw using the current orientation of the harvester head and thus saw hazard zone 202.

If so, as in the case of worker 204, in step 304 the first controller 111 looks up a recommended operation for the chainsaw given the presence of the second worker 204 within the saw hazard zone 202. A recommended operation for such a condition could be to disable operation of the chainsaw.

It should be appreciated that in some embodiments, the position and orientation of the carrier 200 may not be required, as the location and orientation of the head 201 may be sufficient for determining whether a risk of injury is present.

In step 305 the first controller 111 transmits a signal to the second controller 112 to control operation of the harvester head 201 according to the recommended operation, stopping the chainsaw.

In step 306 the execution of the recommended operation, and cause for same, is displayed to the operator of the harvester head 201. The operator may have the option to override the recommended operation - for example by selecting an override option on the display, or selecting the relevant control more than once (for example selecting the saw activation button twice).

Alternatively to steps 305 and 306, following step 304 the first controller 111 may transmit an alert to the operator via monitor 114 warning them of the presence of the worker and notifying them of the recommended operation in step 307.

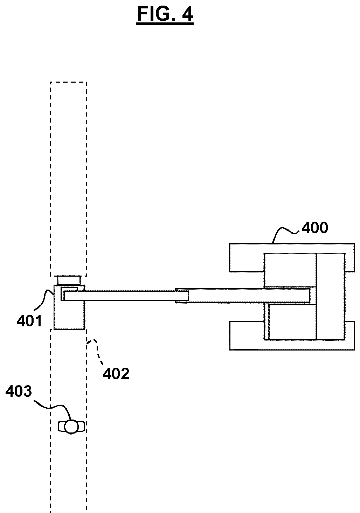

FIG. 4 illustrates a harvester carrier 400 for a harvester head 401. In this embodiment the hazard zone illustrated is a feed hazard zone indicated by dashed line 402. The feed hazard zone 402 represents the space within which a stem may be driven by the drive mechanism of the harvester head 401.

In the scenario illustrated, a similar process to that illustrated by FIG. 3 may be undertaken to find that worker 403 would be within the feed hazard zone 402 - and drive operation of the harvester head 401 disabled.

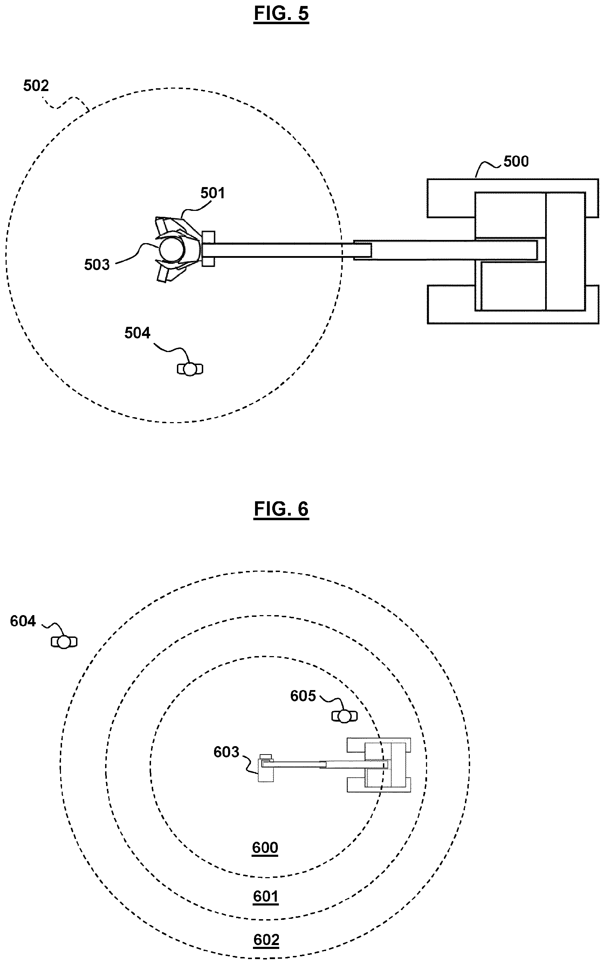

FIG. 5 illustrates a harvester carrier 500 for a harvester head 501. In this embodiment the hazard zone illustrated is a felling hazard zone indicated by dashed line 502. The feed hazard zone 502 represents the space within which a standing tree 503 may fall, having been cut by the cutting means of the harvester head 501.

In the scenario illustrated, a similar process to that illustrated by FIG. 3 may be undertaken to find that worker 504 would be within the felling hazard zone 502 - and cutting operation of the harvester head 501 disabled.

FIG. 6 illustrates an embodiment of the present invention in which a series of concentric proximity zones 600, 601, and 602 are centred about a harvester head 603.

Each proximity zone has an associated hazard rating, increasing with proximity to the harvester head 603.

A first ground worker 604 is illustrated outside the proximity zones, with a second ground worker 605 within the first proximity zone 600.

Referring to elements of FIG. 1B, the first controller 111 is configured to receive position signals from GPS transponders carried by each of the workers 604 and 605. The first controller 111 is configured to determine the location of the workers 604 and 605 relative to the harvester head 603.

On determining that a transponder is within one of the proximity zones, the first controller 111 may notify the operator of their location to ensure that the operator is aware of their presence. The hazard rating of the proximity zone may determine the manner in which this is displayed to the operator. For example, a small notification in the corner of the monitor 114 may be provided for worker 604, while the presence of worker 605 in the highest risk proximity zone may cause a more prominent notification to be issued.

This may be particularly useful in the scenario illustrated, where worker 605 may not be directly within a saw or feed hazard zone of the harvester head 603. The operator may take pre-emptive steps to ensure that the hazard zones do not intersect with the location of the worker 605 and disrupt operation.

Further, or in place of the alert, the operator may be provided with a radar style overview of GPS transponders in the vicinity relative to the operator's position.

Aspects of the present invention have been described by way of example only and it should be appreciated that modifications and additions may be made thereto without departing from the scope thereof as defined in the appended claims.

## Claims

1. A method for operation of a timber-working device (103), the timber-working device (103) configured to perform at least one operation having an associated hazard zone, the method including the steps of:
- receiving at least one wireless signal indicating a location of at least one object tracking device (203);
- determining the location of the object tracking device (203) relative to the at least one hazard zone of the timber-working device (103);
- determining at least one recommended operation of the timber-working device (103) based at least in part on the location of the object tracking device (203) relative to the hazard zone
**characterised in that**
- at least one hazard zone is determined based on the likely path of an object being propelled from the timber-working device (103).

2. A method as claimed in claim 1, wherein the recommended operation of the timber-working device (103) includes:
- disabling operation of a cutting means (108) when the location of the object tracking device (103) is within the at least one hazard zone associated with a cutting means (108) and/or
- controlling a drive mechanism (109) when the location of the object tracking device (103) is within the at least one hazard zone associated with the drive mechanism (109).

3. A method as claimed in claim 2, wherein controlling the drive mechanism (109) includes adjusting the speed of the drive mechanism (109).

4. A method as claimed in any one of claims 1 to 3, wherein at least one hazard zone is an area surrounding a tree to be felled, and wherein the recommended operation of the timber-working device (103) includes disabling operation of a cutting means (108) when the location of the object tracking device (203) is within the hazard zone surrounding the tree.

5. A method as claimed in claim 4, wherein the size of the hazard zone surrounding the tree is determined, at least in part, on a measured diameter of the tree.

6. A method as claimed in any one of claims 1 to 5, including adjusting the at least one hazard zone based at least in part on the current configuration of the timber-working device (103).

7. A method as claimed in any one of claims 1 to 6, wherein the wireless signal is used to identify the nature of an object with which the object tracking device (203) is associated.

8. A method as claimed in claim 7, wherein the recommended operation of the timber-working device (103) is based at least on part on:
- the nature of the object associated with the object tracking device (203).
- the position of one object tracking device (203) relative to another object tracking device (203).

9. A method as claimed in any one of claims 1 to 8, including determining the location of the object tracking device (203) relative to at least one proximity zone surrounding the timber-working device (103).

10. A method as claimed in claim 9, wherein the at least one proximity zone includes a plurality of concentric proximity zones.

11. A method as claimed in either claim 9 or claim 10, wherein each proximity zone has an associated hazard rating.

12. A method as claimed any one of claims 1 to 11, including transmitting notification of an object tracking device (203) being within a hazard zone to an operator device (114).

13. A method as claimed in claim 12, wherein the notification includes the recommended operation of the timber-working device (103).

14. A method of any one of claims 1 to 13, including controlling operation of the timber-working device (103) according to the recommended operation.

15. An apparatus (110) for use with a timber-working device (103), the timber-working device (103) configured to perform at least one operation having an associated hazard zone, the apparatus including:
- at least one processor (111) configured to:
- receive at least one wireless signal indicating a location of at least one object tracking device (203);
- determine the location of the object tracking device (203) relative to the hazard zone of the timber-working device (103);
- determining recommended operation of the timber-working device (103) based at least in part on the location of the object tracking device (203) relative to the hazard zone
**characterised in that**
- at least one hazard zone is determined based on the likely path of an object being propelled from the timber-working device (103).

16. An apparatus (110) as claimed in claim 15, wherein the timber-working device (103) includes a cutting means (108) configured to cut through a stem being processed by the timber-working device (103) and the at least one hazard zone projects from the cutting means (108).

17. An apparatus (110) as claimed in claim 16, wherein the cutting means (108) includes at least one chainsaw having a saw chain, a saw bar around which the saw chain moves, and a saw drive gear for driving the saw chain around the saw bar.

18. An apparatus (110) as claimed in claim 17, wherein the at least one hazard zone centres about the saw drive gear.

19. An apparatus (110) as claimed in either claim 17 or claim 18, wherein the at least one hazard zone extends through substantially 90° in a plane aligning with the saw bar.

20. An apparatus (110) as claimed in either claim 17 or claim 18, wherein the at least one hazard zone extends through substantially 30° in a plane substantially lateral to a plane aligning with the saw bar.

21. An apparatus (110) as claimed in any one of claims 15 to 20, wherein the at least one hazard zone includes a hazard zone projecting from either side of the cutting means (108).

22. An apparatus (110) as claimed in any one of claims 15 to 21, wherein the timber-working device (103) includes a drive mechanism (109) including at least one driven roller (109) configured to control the position of a stem held by the timber-working device (103), and wherein the at least one hazard zone includes a hazard zone projecting from the timber-working device (103) in at least one direction in which the stem is configured to be driven by the drive mechanism (109).

## Patentansprüche

1. Verfahren für den Arbeitsvorgang einer Holzbearbeitungsvorrichtung (103), wobei die Holzbearbeitungsvorrichtung (103) dazu konfiguriert ist, mindestens einen Arbeitsvorgang durchzuführen, der eine zugeordnete Gefahrenzone aufweist, wobei das Verfahren die folgenden Schritte umfasst:
- Empfangen mindestens eines drahtlosen Signals, das einen Standort mindestens eines Objektortungsgeräts (203) angibt;
- Bestimmen des Standorts des Objektortungsgeräts (203) in Bezug zu der mindestens einen Gefahrenzone der Holzbearbeitungsvorrichtung (103);
- Bestimmen mindestens eines empfohlenen Arbeitsvorgangs der Holzbearbeitungsvorrichtung (103) teilweise auf Grundlage des Standorts des Objektortungsgeräts (203) in Bezug zu der Gefahrenzone;
**dadurch gekennzeichnet, dass**
- mindestens eine Gefahrenzone auf Grundlage des wahrscheinlichen Weges bestimmt wird, den ein Objekt, das von der Holzbearbeitungsvorrichtung (103) weggeschleudert wird, einschlägt.

2. Verfahren nach Anspruch 1, wobei der empfohlene Arbeitsvorgang der Holzbearbeitungsvorrichtung (103) Folgendes umfasst:
- Deaktivieren des Arbeitsvorgangs einer Schneidevorrichtung (108), wenn sich der Standort des Objektortungsgeräts (103) innerhalb der mindestens einen einer Schneidevorrichtung (108) zugeordneten Gefahrenzone befindet und/oder
- Steuern eines Antriebsmechanismus (109), wenn sich der Standort des Objektortungsgeräts (103) innerhalb der mindestens einen dem Antriebsmechanismus (109) zugeordneten Gefahrenzone befindet.

3. Verfahren nach Anspruch 2, wobei das Steuern des Antriebsmechanismus (109) das Anpassen der Drehzahl des Antriebsmechanismus (109) umfasst.

4. Verfahren nach einem der Ansprüche 1 bis 3, wobei sich mindestens eine Gefahrenzone in einem Bereich befindet, der einen zu fällenden Baum umgibt, und wobei der empfohlene Arbeitsvorgang der Holzbearbeitungsvorrichtung (103) das Deaktivieren des Arbeitsvorgangs einer Schneidevorrichtung (108) umfasst, wenn sich der Standort des Objektortungsgeräts (203) innerhalb der Gefahrenzone, die den Baum umgibt, befindet.

5. Verfahren nach Anspruch 4, wobei die Größe der Gefahrenzone, die den Baum umgibt, zumindest teilweise mittels eines gemessenen Durchmessers des Baums bestimmt wird.

6. Verfahren nach einem der Ansprüche 1 bis 5, das Anpassen der mindestens einen Gefahrenzone zumindest teilweise auf Grundlage der aktuellen Konfiguration der Holzbearbeitungsvorrichtung (103) umfassend.

7. Verfahren nach einem der Ansprüche 1 bis 6, wobei das drahtlose Signal dazu verwendet wird, um die Art eines Objekts, dem das Objektortungsgerät (203) zugeordnet ist, zu identifizieren.

8. Verfahren nach Anspruch 7, wobei der empfohlene Arbeitsvorgang der Holzbearbeitungsvorrichtung (103) zumindest teilweise auf Folgendem beruht:
- der Art des Objekts, das dem Objektortungsgerät (203) zugeordnet ist,
- dem Standort eines Objektortungsgeräts (203) in Bezug zu einem weiteren Objektortungsgerät (203).

9. Verfahren nach einem der Ansprüche 1 bis 8, das Bestimmen des Standorts des Objektortungsgeräts (203) in Bezug zu der mindestens einen, die Holzbearbeitungsvorrichtung (103) umgebenden, Umgebungszone umfassend.

10. Verfahren nach Anspruch 9, wobei die mindestens eine Umgebungszone mehrere konzentrische Umgebungszonen umfasst.

11. Verfahren nach Anspruch 9 oder Anspruch 10, wobei jede Umgebungszone eine zugeordnete Gefahrenstufe aufweist.

12. Verfahren nach einem der Ansprüche 1 bis 11, das Übertragen einer Benachrichtigung, wenn sich ein Objektortungsgerät (203) innerhalb einer Gefahrenzone einer Bedieneinrichtung (114) befindet, umfassend.

13. Verfahren nach Anspruch 12, wobei die Benachrichtigung den empfohlenen Arbeitsvorgang der Holzbearbeitungsvorrichtung (103) umfasst.

14. Verfahren nach einem der Ansprüche 1 bis 13, das Steuern des Arbeitsvorgangs der Holzbearbeitungsvorrichtung (103) dem empfohlenen Arbeitsvorgang entsprechend umfassend.

15. Vorrichtung (110) zur Verwendung mit einer Holzbearbeitungsvorrichtung (103), wobei die Holzbearbeitungsvorrichtung (103) dazu konfiguriert ist, mindestens einen Arbeitsvorgang durchzuführen, der eine zugeordnete Gefahrenzone aufweist, wobei die Vorrichtung Folgendes umfasst:
- mindestens einen Prozessor (111), der für Folgendes konfiguriert ist:
- Empfangen mindestens eines drahtlosen Signals, das einen Standort mindestens eines Objektortungsgeräts (203) angibt;
- Bestimmen des Standorts des Objektortungsgeräts (203) in Bezug zu der Gefahrenzone der Holzbearbeitungsvorrichtung (103);
- Bestimmen eines empfohlenen Arbeitsvorgangs der Holzbearbeitungsvorrichtung (103) mindestens teilweise auf Grundlage des Standorts des Objektortungsgeräts (203) in Bezug zu der Gefahrenzone;
**dadurch gekennzeichnet, dass**
- mindestens eine Gefahrenzone auf Grundlage des wahrscheinlichen Weges bestimmt wird, den ein Objekt, das von der Holzbearbeitungsvorrichtung (103) weggeschleudert wird, einschlägt.

16. Vorrichtung (110) nach Anspruch 15, wobei die Holzbearbeitungsvorrichtung (103) eine Schneidevorrichtung (108) umfasst, die dazu konfiguriert ist, einen Stamm durchzuschneiden, der von der Holzbearbeitungsvorrichtung (103) bearbeitet wird, und wobei sich die mindestens eine Gefahrenzone von der Schneidevorrichtung (108) erstreckt.

17. Vorrichtung (110) nach Anspruch 16, wobei die Schneidevorrichtung (108) mindestens eine Kettensäge umfasst, die eine Sägekette, eine Sägeschiene, um die sich die Sägekette herum bewegt, und ein Sägegetriebe aufweist, das die Sägekette um die Sägeschiene antreibt.

18. Vorrichtung (110) nach Anspruch 17, wobei die mindestens eine Gefahrenzone um das Sägegetriebe zentriert ist.

19. Vorrichtung (110) nach Anspruch 17 oder Anspruch 18, wobei sich die mindestens eine Gefahrenzone durch im Wesentlichen 90° in einer Ebene erstreckt, die an der Sägeschiene ausgerichtet ist.

20. Vorrichtung (110) nach Anspruch 17 oder Anspruch 18, wobei sich die mindestens eine Gefahrenzone durch im Wesentlichen 30° in einer Ebene erstreckt, die im Wesentlichen lateral zu einer Ebene ist, die an der Sägeschiene ausgerichtet ist.

21. Vorrichtung (110) nach einem der Ansprüche 15 bis 20, wobei die mindestens eine Gefahrenzone eine Gefahrenzone umfasst, die sich von beiden Seiten der Schneidevorrichtung (108) erstreckt.

22. Vorrichtung (110) nach einem der Ansprüche 15 bis 21, wobei die Holzbearbeitungsvorrichtung (103) einen Antriebsmechanismus (109) umfasst, der mindestens eine angetriebene Walze (109) umfasst, die dazu konfiguriert ist, die Position eines Stamms, der von der Holzbearbeitungsvorrichtung (103) gehalten wird, zu steuern, und wobei die mindestens eine Gefahrenzone eine Gefahrenzone umfasst, die sich von der Holzbearbeitungsvorrichtung (103) in mindestens eine Richtung erstreckt, in die der Stamm konfiguriert ist, von dem Antriebsmechanismus (109) angetrieben zu werden.

## Revendications

1. Procédé de commande d'un dispositif de travail du bois (103), le dispositif de travail du bois (103) étant configuré de manière à exécuter au moins une opération incluant une zone à risque associée, le procédé comprenant les étapes suivantes :
recevoir au moins un signal sans fil qui indique un emplacement d'au moins un dispositif de suivi d'objet (203) ;
déterminer l'emplacement du dispositif de suivi d'objet (203) par rapport à ladite au moins une zone à risque du dispositif de travail du bois (103) ; et
déterminer au moins une opération recommandée du dispositif de travail du bois (103) sur la base au moins en partie de l'emplacement du dispositif de suivi d'objet (203) par rapport à la zone à risque,
**caractérisé en ce qu'**au moins une zone à risque est déterminée sur la base du chemin probable d'un objet qui est projeté par le dispositif de travail du bois (103).

2. Procédé selon la revendication 1, dans lequel l'opération recommandée du dispositif de travail du bois (103) comprend les étapes suivantes :
arrêter le fonctionnement de moyens de coupe (108) lorsque l'emplacement du dispositif de suivi d'objet (103) est situé à l'intérieur de ladite au moins une zone à risque associée aux moyens de coupe (108), et/ou
commander un mécanisme d'entraînement (109) lorsque l'emplacement du dispositif de suivi d'objet (103) est situé à l'intérieur de ladite au moins une zone à risque associée au mécanisme d'entraînement (109).

3. Procédé selon la revendication 2, dans lequel la commande du mécanisme d'entraînement (109) comprend le réglage de la vitesse du mécanisme d'entraînement (109).

4. Procédé selon l'une quelconque des revendications 1 à 3, dans lequel ladite au moins une zone à risque est une région qui entoure un arbre à abattre, et dans lequel l'opération recommandée du dispositif de travail du bois (103) comprend l'arrêt du fonctionnement des moyens de coupe (108) lorsque l'emplacement du dispositif de suivi d'objet (203) est situé à l'intérieur de la zone à risque qui entoure l'arbre.

5. Procédé selon la revendication 4, dans lequel la taille de la zone à risque entourant l'arbre est déterminée, au moins en partie, sur la base d'un diamètre mesuré de l'arbre.

6. Procédé selon l'une quelconque des revendications 1 à 5, comprenant le réglage de ladite au moins une zone à risque sur la base au moins en partie de la configuration en cours du dispositif de travail du bois (103).

7. Procédé selon l'une quelconque des revendications 1 à 6, dans lequel le signal sans fil est utilisé dans le but d'identifier la nature d'un objet auquel le dispositif de suivi d'objet (203) est associé.

8. Procédé selon la revendication 7, dans lequel l'opération recommandée du dispositif de travail du bois (103) est basée au moins en partie sur :
la nature de l'objet associé au dispositif de suivi d'objet (203), et/ou
la position d'un dispositif de suivi d'objet (203) par rapport à un autre dispositif de suivi d'objet (203).

9. Procédé selon l'une quelconque des revendications 1 à 8, comprenant la détermination de l'emplacement du dispositif de suivi d'objet (203) par rapport à au moins une zone de proximité qui entoure le dispositif de travail du bois (103).

10. Procédé selon la revendication 9, dans lequel ladite au moins une zone de proximité comprend une pluralité de zones de proximité concentriques.

11. Procédé selon la revendication 9 ou la revendication 10, dans lequel un indice de danger est associé à chaque zone de proximité.

12. Procédé selon l'une quelconque des revendications 1 à 11, comprenant la transmission d'une notification d'un dispositif de suivi d'objet (203) qui se trouve à l'intérieur d'une zone à risque à un dispositif de commande (114).

13. Procédé selon la revendication 12, dans lequel la notification comprend l'opération recommandée du dispositif de travail du bois (103).

14. Procédé selon l'une quelconque des revendications 1 à 13, comprenant la commande du fonctionnement du dispositif de travail du bois (103) conformément à l'opération recommandée.

15. Appareil (110) à utiliser avec un dispositif de travail du bois (103), le dispositif de travail du bois (103) étant configuré de manière à exécuter au moins une opération incluant une zone à risque associée, l'appareil comprenant :
au moins un processeur (111) configuré de manière à :
recevoir au moins un signal sans fil qui indique un emplacement d'au moins un dispositif de suivi d'objet (203) ;
déterminer l'emplacement du dispositif de suivi d'objet (203) par rapport à la zone à risque du dispositif de travail du bois (103) ;
déterminer une opération recommandée du dispositif de travail du bois (103) sur la base au moins en partie de l'emplacement du dispositif de suivi d'objet (203) par rapport à la zone à risque,
**caractérisé en ce qu'**au moins une zone à risque est déterminée sur la base du chemin probable d'un objet qui est projeté par le dispositif de travail du bois (103).

16. Appareil (110) selon la revendication 15, dans lequel le dispositif de travail du bois (103) comprend des moyens de coupe (108) configurés de manière à couper un tronc qui est traité par le dispositif de travail du bois (103), et ladite au moins une zone à risque se projette à partir des moyens de coupe (108).

17. Appareil (110) selon la revendication 16, dans lequel les moyens de coupe (108) comprend au moins une tronçonneuse présentant une chaîne de scie, un guide de chaîne autour duquel la chaîne de scie se déplace, et un engrenage d'entraînement de chaîne pour entraîner la chaîne de scie autour du guide de chaîne.

18. Appareil (110) selon la revendication 17, dans lequel ladite au moins une zone à risque est centrée autour de l'engrenage d'entraînement de chaîne.

19. Appareil (110) selon la revendication 17 ou la revendication 18, dans lequel ladite au moins une zone à risque s'étend sur sensiblement 90° dans un plan qui s'aligne avec le guide de chaîne.

20. Appareil (110) selon la revendication 17 ou la revendication 18, dans lequel ladite au moins une zone à risque s'étend sur sensiblement 30° dans un plan sensiblement latéral à un plan qui s'aligne avec le guide de chaîne.

21. Appareil (110) selon l'une quelconque des revendications 15 à 20, dans lequel ladite au moins une zone à risque comprend un zone à risque qui se projette à partir des deux côtés des moyens de coupe (108).

22. Appareil (110) selon l'une quelconque des revendications 15 à 21, dans lequel le dispositif de travail du bois (103) comprend un mécanisme d'entraînement (109) comprenant au moins un rouleau entraîné (109) configuré de manière à commander la position d'un tronc maintenu par le dispositif de travail du bois (103), et dans lequel ladite au moins une zone à risque comprend une zone à risque qui se projette à partir du dispositif de travail du bois (103) dans au moins une direction dans laquelle le tronc est configuré de manière à être entraînée par le mécanisme d'entraînement (109).
